# EUROPEAN PATENT APPLICATION

(11) **EP 1 798 656 A2**
(43) Date of publication of application: **20.06.2007**
(21) Application number: 06256205.3
(22) Date of filing: 05.12.2006
(51) Int. Cl.: G06F 21/00

(54) **Locking of applications for specially marked content**

(30) Priority: 13.12.2005 US 302963
(71) Applicant: Nokia Corporation, 02150 Espoo (FI)
(72) Inventor: Davydov, Alexander, 40545 Düsseldorf (DE); Rhodes, Michael, Winchester SO22 5ND (GB)
(74) Representative: Khan, Mohammed Saiful Azam

(57) **Abstract**

A method, device and computer program for locking applications running on a wireless device for specially marked content is presented wherein the application is marked in a special way to condition the device software to recognize that the application is restricted to specific content. A specific piece of content is created and is marked in a special way so that the device software can match the specific piece of content marking to the application marking. After the application and the specific piece of content are deployed onto the mobile device, the device software recognizes the application is restricted to play specific content when the application requests the specific piece of content and compares the requested specific piece of content marking to the application marking. Application access to the specific piece of content is granted in response to the application and specific piece of content markings matching and denied in response to the application and specific piece of content markings not matching.

## Description

### TECHNICAL FIELD

The present invention relates generally to a method for limiting applications to run specific content and deals more particularly with a method for locking applications on a wireless device for specially marked content using OMA DRM technology.

### BACKGROUND OF THE INVENTION

OMA DRM is a Digital Rights Management standard published by the Open Mobile Alliance and is used in proprietary mobile terminals or wireless devices, for example, Nokia mobile terminals, to protect various types of content carried by the mobile terminal including but not limited to images, sound files, videos, and other content well known to those skilled in the ant. In this standard, the rights that define rules for consumption of the content are defined by a Rights Object associated with the content. This Rights Object is delivered securely to the destination and is stored securely at the destination.

The OMA DRM standard allows three methods of content protection:
'forward-lock', 'combined delivery' and 'separate delivery'. The "forward-lock" content protection method provides a file based copy protection that prevents content from being forwarded from the mobile device. The "combined delivery" content protection method is similar to "forward-lock" but additional usage rights such as for example like "use only once" can be specified for the content using the Rights Object. The "separate delivery" content protection method provides added security by delivering the content as encrypted files and separately from the Rights Object.

The "separate delivery" method of content protection enables superdistribution in which DRM protected content can be distributed by the destination. DRM protected content is downloaded to the mobile device e.g. by using the browser of the mobile device. The DRM protected content is stored in the normal memory of the mobile device in an encrypted form. The Rights Object associated with the DRM protected content is also downloaded. The Rights Object is stored in a secure portion of the mobile device's memory and cannot be tampered with by a user of the mobile device. The Rights Object specifies the consumption rules for the content and will also include a decryption key if the content is encrypted.

More specifically, OMA DRM governs how content is used and allows the development of new end-user features and new types of mobile content services for content providers, service developers, operators and service providers. In other words, OMA DRM technology allows content providers to formulate rules according to which a given piece of content is consumed or used. The mobile terminal generally includes a proprietary software component, which is also referred to as the DRM agent, to enforce the usage rules established by the content provider. The reader is referred to the literature for a further detailed explanation of OMA DRM technology.

The prior art typically restricts access to DRM protected content only to applications that were originally stored in the memory during manufacture of the mobile device because the application could not be subsequently modified or replaced. It should be obvious that if the mobile device is not able to download additional applications then the access is restricted to the pre-installed applications and therefore in this case, there can be no "restriction" because there are no downloaded applications. It is also now common for some mobile devices to be modified or up-graded by downloading applications to the mobile device, however in these cases where there are downloaded applications access to DRM protected content is restricted for the reason that the device manufacturer and the content provider have to ensure that new applications will not leak the DRM protected content.

One way of downloading a new application is within a MIDlet suite as defined by the Mobile Information Device Profile (MIDP) of Java 2 Micro Edition (J2ME). A MID1et suite comprises a Java Application Descriptor (JAD) file and a Java Archive (JAR) file. The JAD file contains information about the JAR file. The executable application resides within the JAR file. MIDP provides security for a certified MIDlet suite. The originator of the MIDlet suite can place a digital signature of the JAR file and a Digital Certificate into the JAD file.

The RSA Public Key Cryptosystem uses a matched pair of encryption and decryption keys referred to generally as a Public Key (PuK) and a Private Key (PrK). Each key of the key pair performs a one-way transformation upon the data. What one key does the other key reverses. The PuK is made available by its owner, while the PrK remains secret. A private message is created by scrambling the message content with the recipient's PuK. This scrambled message can only be decoded using the recipient's PrK and therefore only by the recipient.

A digital signature is created by scrambling commonly known or derivable data using a PrK. If a person can successfully unscramble the scrambled data using a user's PuK, then the data must have been originally scrambled by that user. Typically the digital signature is bound to the message content by scrambling the HASH of the message content using the PrK. This also means that the signature changes with each message. The recipient of the message decrypts the digital signature using the PuK and then compares the decrypted digital signature to the HASH of the message content. If the two match, the message has not been tampered with and its origin is verified.

However, the recipient of the message must also be sure that he/she is using the sender's correct public key. The public key is typically sent in a Digital Certificate along with the signed message. The Digital Certificate contains the public key PuK (and perhaps other information) signed by a trusted third party (TTP). The Digital Certificate includes the sender's public key PuK (and perhaps other information) and a digital fingerprint corresponding to the HASH of the public key (and other information, if any) scrambled using the PrK of the TTP. The digital fingerprint is also known as the Certificate signature as it is the signature of the data content, including the sender's public key PuK in the Digital Certificate. The PuK of the TTP will be known by the recipient. The recipient can unscramble the digital fingerprint using the PuK of the TTP and compare the result with the PuK in the Digital Certificate. If they match, the identity of the sender has been verified by the TTP. This prevents one person masquerading as another. A well known TTP for example is the Certification Authority Verisign^{™}.

When a signed message is sent, the Digital Certificate is included. The recipient of the message first uses the Digital Certificate to verify that the author's PuK included in the certificate is authentic and then uses that PuK to verify the message's signature. This way, only one Public Key, that of the TTP need be widely publicized, since everyone else can then simply transmit their Digital Certificate with their messages. Thus a Digital Certificate binds an identity to the public key PuK of a public/private key pair that can be used to encrypt and sign digital information.

In general, an application received in a MID1 et suite is not allowed to access DRM protected content because such access would allow a malicious application to make copies of the content and/or distribute it or would allow accidental breaches of security by a benign application. This would allow the DRM protection to be circumvented. However, some trusted MIDlet suites, for example, those signed by Nokia, the same assignee as the present invention herein, or operators such as Vodafone, can be allowed to access DRM protected files.

Prior art OMA DRM usage rules are very limited and typically allow the content provider to only specify the number of times a given piece of content can be consumed (played, used, executed) or specify the time interval or duration that a given piece of content can be consumed (played, used, executed). The prior art OMA DRM technology does not permit a content provider to establish a link between the content and the consuming application running on the mobile terminal.

Accordingly, one problem with the prior art is that for example an application such as a music player cannot be locked or inhibited from opening and playing music files created by a number of different content providers rather than being restricted to only authorized or qualified content providers. Prior art solution attempts to overcome the problem propose to use application level encryption or to mark the content by modifying it to allow it to be consumed. Such prior art solutions are unduly complex, limited and difficult to implement because the application and/or the content themselves needs to be changed.

Other prior art solutions similar to those used in the games industry rely on a dedicated hardware/software combination wherein an application running on a proprietary hardware device such as for example, a Microsoft X-Box, Sony Play Station and similar proprietary devices, restrict game play content to only content specifically authorized to play on that player and not on another different player. For example, a Microsoft X-Box will only play content specifically produced for the X-Box exhibiting appropriate authorization criteria recognizable by the X-Box hardware. In other words, a Microsoft X-Box can only play X-Box content and not Sony Play Station content and visa-versa. A side benefit of this is the reputation of the device brand name and goodwill is protected from possible harm that might occur from cheap or low quality games or unlicensed games because they are prevented from being played on the player by making the player in such a way that the player only plays licensed or approved games.

The dedicated hardware/software solution is not suitable for the mobile industry because the application needs to run on mobile devices produced by many different manufacturers. Additionally, the manufacturer does not know the application that may be used at the time of manufacture so specific protection cannot be built into the mobile device during production.

Another prior art solution is proposed in patent application PCT/IB04/002393 titled "A Method and Device for Determining Whether an Application Should Access Digital Content", assigned to the same assignee as the present invention, in which OMA DRM is used to allow the content to decide which applications, such as music players, may be allowed to access and play the content, ie., the content provider defines which applications can open the provider's content. In contrast to the solution proposed in PCT/IB04/002393, the present invention does the opposite by defining how the application provider can specify what content can be opened by the application.

It would be desirable therefore to extend the OMA DRM technology to lock a given application to only open files created by a corresponding given content provider and to prevent the given application from opening files created by another different content provider without changing the application and/or the content themselves.

It is an object of the present invention to lock an application running on a mobile device to play only specially marked content or not play the content at all if the content is not specially marked to match the application marking.

It is a further object of the present invention to extend OMA DRM technology to allow applications to decide what content they will accept.

### SUMMARY OF THE INVENTION

In accordance with a broad aspect of the invention, a method for locking applications running on a wireless device for specially marked content is presented wherein the application is marked in a special way to condition the device software to recognize that the application is restricted to specific content. A specific piece of content is created and is marked in a special way so that the device software can match the specific piece of content marking to the application marking. The application and the piece of content markings are made secure so they cannot be removed. After the application and the specific piece of content are deployed onto the mobile device, the device software recognizes the application is restricted to play specific content when the application requests the specific piece of content and compares the requested specific piece of content marking to the application marking. Application access to the specific piece of content is granted in response to the application and specific piece of content markings matching and denied in response to the application and specific piece of content markings not matching.

In a further aspect of the invention, a mobile device and computer program are presented for carrying out the method for locking applications running on a wireless device for specially marked content.

### BRIEF DESCRIPTION OF THE DRAWINGS

Other objects, features and advantages of the present invention will become readily apparent from the following written description of preferred embodiments taken in conjunction with the following drawings wherein:
Fig. 1 is a flowchart showing the major functional steps for carrying out the method of the invention for locking applications for specially marked content;
Fig. 2 is a block diagram of a system showing an exemplary embodiment of the method of the invention implemented in a JAVA application;
Fig 3 is a flowchart showing the major functional steps for carrying out the method of the invention in a JAVA application as illustrated in the system shown in Fig. 2 wherein the locked MIDlet requests an OMA DRM protected content;
Fig. 4 is a flowchart showing the major functional steps in another embodiment of the method of the invention for locking a manufacturer's MIDlet to only read specific content;
Fig. 5 is a flowchart showing the major functional steps in a further embodiment of the method of the invention for locking a third party MIDlet to only read specific content;
Fig. 6 is a functional block diagram of a mobile device embodying the present invention.

### WRITTEN DESCRIPTION OF PREFERRED EMBODIMENTS

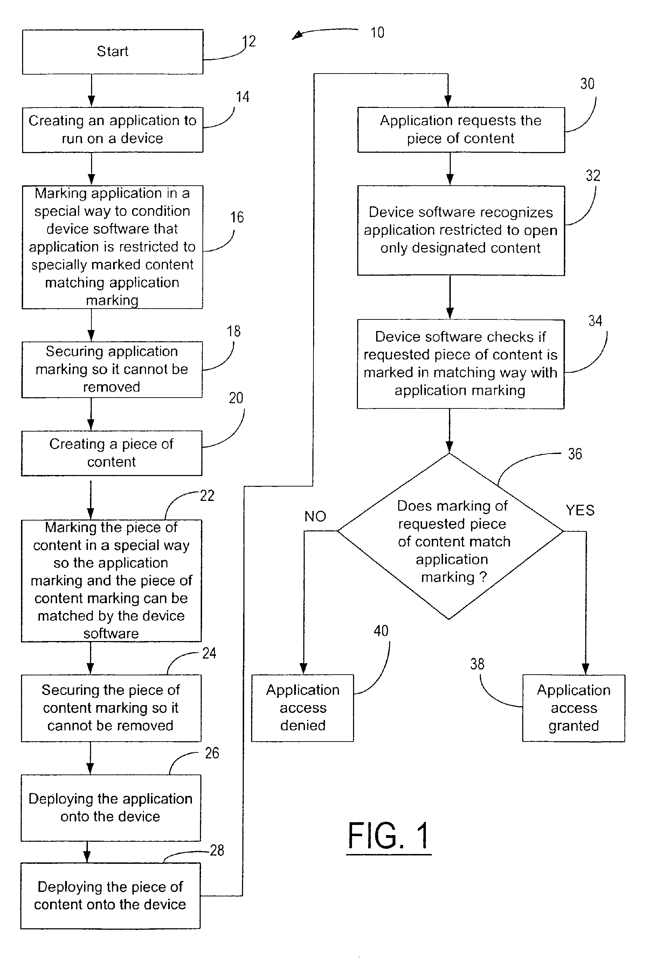

Turning now to the drawings and considering the invention in further detail, a flowchart generally designated 10 is illustrated in Fig. 1 and shows the major functional steps for carrying out the method of the invention for locking applications for opening only specially marked content and is implemented using any suitable technology for carrying out the intended function. The basic concept of the invention is to reliably mark both the application that runs on a mobile device or terminal and the piece of content that is desired to be run by the application on the mobile device. The mobile device's system software and the DRM agent is modified so that they both check to determine if the content's mark and the application's mark match and if the marks match (i.e. both digital signatures can be verified using the same public key from the certificate), allow the application to access the piece of content.

The method starts in step 12 and moves to step 14 in which an application that is to run on the mobile device is created. The method then moves to step 16 wherein the application is somehow marked in a special way to condition the mobile device software that the application running on the mobile device is restricted to specially marked content matching the application marking. The application marking is suitably secured in step 18 so it cannot be removed. Next, a piece of content is created in step 20 and is marked in a special way in step 22 so that the application marking and the piece of content marking can be matched by the mobile device software. The piece of content marking is suitably secured in step 24 so it cannot be removed. It should be recognized that the order of creating the application and piece of content is not critical, for example, the piece of content can be created before the application or visa-versa or they may be created simultaneously. The application is then deployed onto the mobile device in step 26 and the piece of content is deployed onto the mobile device in step 28. The deploying of the application and piece of content onto the mobile device may be carried out in any order. Next, the application requests the piece of content in step 30. Now, the device software recognizes in step 32 that the application is restricted to open only designated content. In response thereto, the device software checks in step 34 if the requested piece of content is marked in a matching way with the application marking. If in step 36 it is determined that the requested piece of content marking matches the application marking, the application access is granted in step 38. If in step 36 it is determined that the marking of the requested piece of content does not match the application marking, the application access is denied in step 40.

The method can be implemented with the creation of a private/public key pair. The application that needs to be locked to use only specially marked content is marked and signed with the private key and with the private key. Generally, it is not sufficient to achieve the intended goal by just signing the application alone; it also has to be marked in a special way. The special marking is required to distinguish between applications that are just simply signed and applications that are locked for a specific content. The marking of the application is as important in the present invention as the signing of the application. The application signature along with the certificate containing the public key is appended to the application in any suitable and well known manner. A piece of content is prepared according to OMA DRM rules and is signed using the same private key that was used to mark the application and the signature is appended to the rights object in any suitable and well known manner. Alternately, a piece of content is prepared according to OMA DRM rules and a rights object is signed using the same private key that was used to mark the application and the signature is appended to the rights object. The application and the piece of content are deployed to the mobile device in any suitable and well known manner. When the application running on the mobile device requests any desired piece of DRM protected content, the DRM agent checks to see if the application is marked and signed as described in steps 14-18. If the application is signed and marked , the DRM agent interprets that any content that is opened by the application must be properly signed. As a consequence, the DRM agent designates the application to only open content with a DRM content signature matching the application private key signature (i.e. both signatures can be verified using the same public key from the certificate). The DRM agent confirms that the requested content's rights object is signed with the same private key that was used to mark and sign the application. The DRM agent has access to the public key from the certificate appended to the application and checks for the presence of the properly marked content using this public key. The application running on the mobile device then accesses and opens the requested DRM protected content file. It is essential that any marking of OMA DRM protected content be done through the rights object to ensure the marking is secure and cannot be removed. Accordingly, it can be seen that the method of the invention ensures that an application marked in a special and secure way can only access a piece of content that is also marked in a special and secure matching way. It will also be recognized and appreciated that the use of and operation of public/private key pairs are well known and understood in the art. The reader is referred to the literature, textbooks and other well known and available sources for additional information and explanation of private/public key operation and applications.

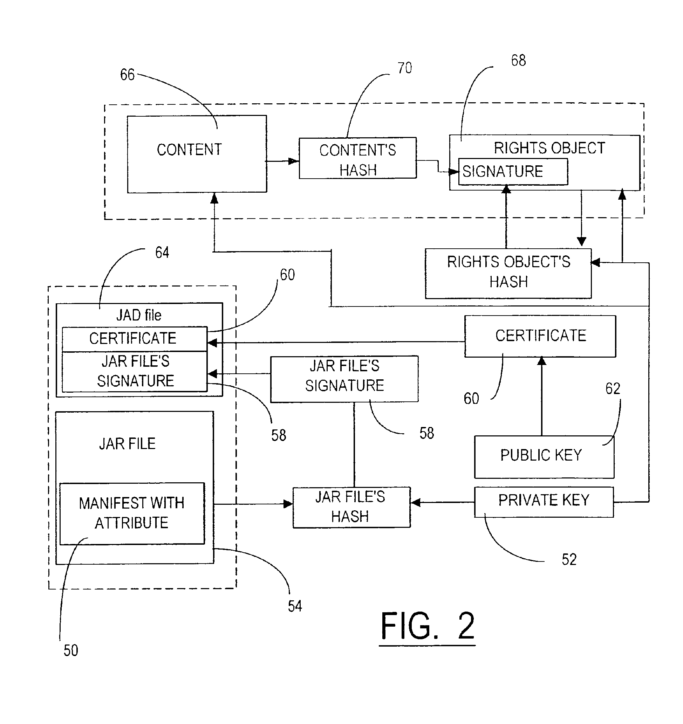

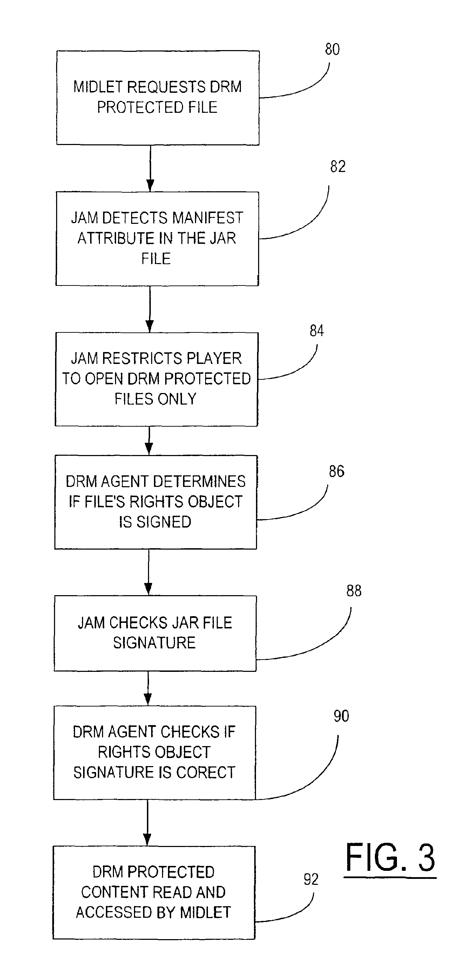

Turning now to Figs. 2 and 3, the invention is presented by way of example and illustration in a JAVA application to provide a fuller understanding and appreciation of the features and benefits in a user environment. Let us say for example a content provider decides to open a music service and as part of the service the provider creates, purchases or otherwise makes available a sophisticated music player that provides a unique user experience. The music player is implemented as a Java application. A Java application for mobile devices is commonly referred to and known as a MID1et in the art indicating that the application runs on a mobile device. Also, consider further that as an incentive to users to sign up for the music service, the content provider may give the music player away at no cost or low cost to users that subscribe to the music service offered by the content provider. Obviously the content provider is in business to make money and desires to protect his/her investment in the music service and the music player. The content provider is interested in making sure that all music for the music player comes from his/her music service and not from other music sources or unauthorized providers. In other words, the sophisticated music player that the content provider gives away will only play music available from the content provider service and no other service unless the service is authorized.

The content provider achieves the stated goal and objective by placing a special attribute into the manifest 50, (i.e. into the Java Archive File (JAR) file 54) thus the application is marked in a special way. The attribute(s) will tell the mobile device's Java Application Manager (JAM) that the application is allowed to open only specially marked OMA DRM protected files only. The content provider also creates a private/public key pair and uses the private key 52 to sign the JAR file 54. The JAR file signature 58, along with the certificate 60 containing the public key 62 is placed in the MID1et suite's Java Application Descriptor (JAD) file 64. The JAD file is the defined place for a signing certificate in a Java MIDP. Attempts at the unauthorized removal of the special attribute from the manifest 50 can be enforced using other methods, for example, OMA DRM protection methods. The user now downloads the player Over-The-Air (OTA) in a well known and understood manner. In the OTA download, the music player itself can be protected by using the OMA DRM "separate delivery" method which OMA DRM delivery method insures that the JAR file will not be tampered with. The service provider or operator marks all music files (i.e., the content 66 in the service) in a special way, by signing the music file itself using the hash 70 or by signing the music file's OMA DRM rights object 68 with the private key 52 created by the content provider. The user or subscriber to the music service then downloads one or several music files using any appropriate method from the service provider or operator to the music player.

Still referring to Fig 2 and with particular reference to the flowchart shown in Fig. 3, the user starts the music player and the MID1et requests a DRM protected file in step 80. The JAM detects or notices in step 82 the manifest attribute in the JAR file and restricts in step 84 the music player to open specially marked DRM protected files only. The detection of the manifest attribute in the JAR file can alternately occur after the MIDlet is downloaded to the mobile device or at the time the MIDlet is started. The DRM agent notices in step 86 that the file's rights object is marked in a special way (i.e. signed). The JAM checks the JAR file signature in step 88 to see if it is properly signed and verifies the signature by using the public key in the certificate 60. The DRM agent also checks to determine that if the rights object signature is correct and verifies the signature by using the public key used in the certificate 60. The DRM protected content is read and accessed by the MID1et in step 92 for playing by the music player. If the file's rights object is not properly signed and matched with the JAR signature (i.e. both signatures cannot be verified using the same public key from the certificate), the file content is not marked in a special way and therefore cannot be accessed by the music player thereby preventing the user from obtaining music from a source other than the content provider.

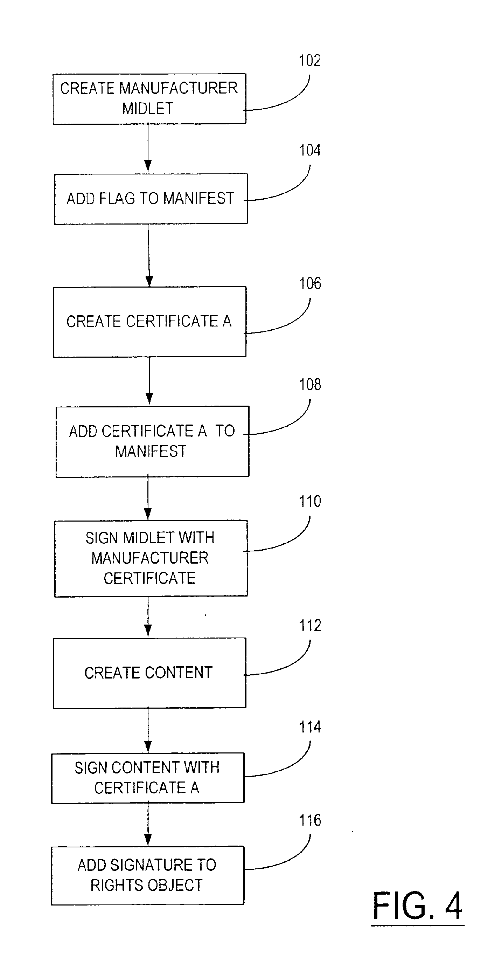

In a further example of the invention, a manufacturer's MIDlet (a MIDlet that is endorsed by the manufacturer) which must only read content signed with a particular key is presented. Now with reference to the flowchart shown in Fig. 4, the method of the invention starts in step 102 wherein the manufacturer creates a MIDlet. A flag is added in the manifest in step 104 to say the subject manufacturer's MIDlet must only read specific content, that is content marked in a special way. Next, a certificate based on a new key-pair (Certificate A) is created in step 106 and the certificate is added to the manifest in step 108. Alternately, the addition of this certificate could be the flag in step 104. The subject manufacturer-created MIDlet is signed with the manufacturer's private key corresponding to the certificate in step 110. The content is created in step 112 and signed with the private key corresponding to Certificate A in step 114. The signature is added to the Rights Object in step 116.

In this example, 3^{rd} parties are still able to tamper with the application however, the tampered copies cannot be resigned with the Manufacturer private key. Further, because the rogue or tampered with copies are not manufacturer-signed MIDlets, they are executed in the device as untrusted (unpriviledged) applications and therefore are denied access to content (DRM protected or unprotected). To overcome the lack of protection against someone tampering with the MIDlet and using it only with unprotected content, the application can be protected using OMA DRM "forward lock/combined delivery" or "separate delivery".

OMA DRM protection still only provides a limited obstacle against third party tampering. A determined hacker with sufficient time and resource may still be able to break into OMA DRM and get the MIDlet source however, the hacker still cannot create a MIDlet which will read both the DRM protected content and unprotected content since he does not possess the manufacturer private key. Although the hacker is still able to hack the MIDlet, modify and redistribute it as if it were his own, the changed MID1et is no longer signed and will therefore be executed as untrusted which results in not having privilege to play any content whether protected or not protected. So even though the MIDlet can be hacked by a committed expert, the hacked MIDlet is of sufficient low value that hackers will not waste their time to hack the MIDlet and users will not bother to install any hacked MIDlets which are created because the MIDlet is useless.

In summary, even a hardened hacker cannot create content for the legitimate (unhacked) subject MIDlet because he cannot sign content without the private key and the private key never leaves the locked safe in the offices of the MIDlet/content owner. The hacker can get a rights object and he can get the signature from it but he cannot put this signature on any other content because the content will not then authenticate (i.e., the application marking and content marking do not match). A legitimate MIDlet cannot read illegitimate content.

The method used for locking of a manufacturer's MIDlet as described above may likewise be utilized to obtain similar results wherein a privileged operator creates or signs a MIDlet which must only read content signed with a particular key. As above, the private key cannot be determined from any of the known information and thus unauthorized content for the subject privileged operator's MIDlet carmot be created.

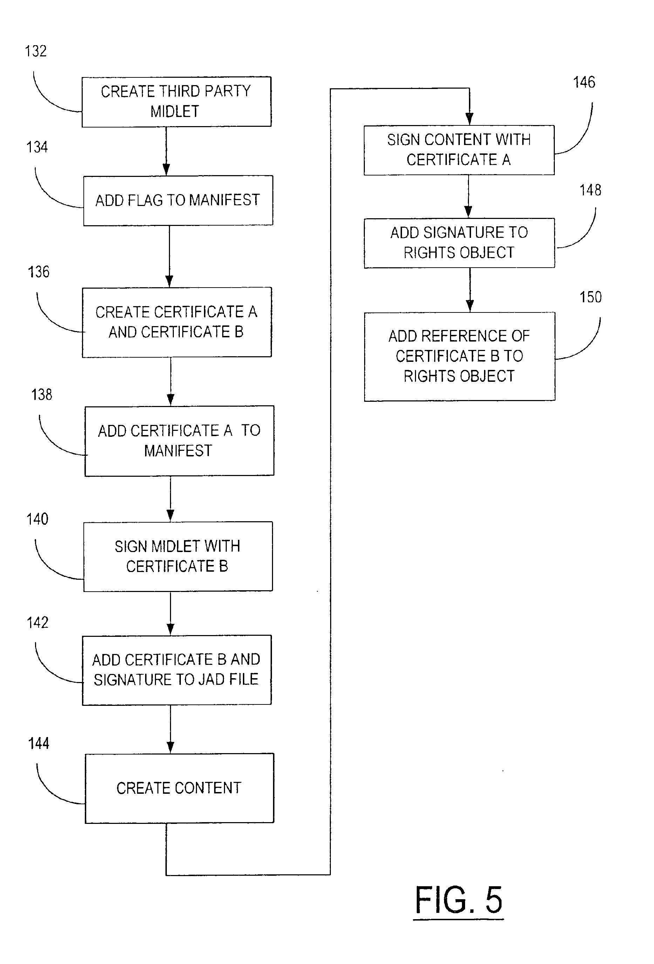

In another example of the invention, a third party MIDlet which must only read content signed with a particular key is presented with reference to Fig. 5 and starts in step 132 with the third party creating a MIDlet. A flag is added in the manifest in step 134 to say the subject third party MIDlet can only read specific marked content. Next, two certificates, Certificate A and Certificate B are created in step 136 and Certificate A is added to the manifest in step 138. Alternately, the addition of Certificate A could be the flag in step 134. The subject third party MID1et is signed with Certificate B in step 140 and the Certificate B and signature are added to the JAD file in step 142. The content is created in step 144 and signed with the Certificate A in step 146. The signature is added to the Rights Object in step 148. Finally, a fingerprint or other suitable reference to Certificate B is added to the Rights Object in step 150, for example by following the rules specified in patent application PCT/IB04/002393 the disclosure of which is incorporated herein by reference.

In this example, the result is content that the platform will not permit to be played by any application except one signed by Certificate B, and an application that will only play content signed with Certificate A. Further, Certificate A and Certificate B can be the same Certificate but they do not have to be. The subject third party MIDlet is not protected and could be hacked however, any hacked MIDlet will not be permitted to read the DRM content targeted at the original third party MIDlet because the MIDlet will no longer be signed with Certificate B. Also, as explained above, to protect the MIDlet, OMA DRM can be used to encrypt and distribute the application. In summary, a legitimate MIDlet cannot read illegitimate content.

The crucial important aspect of the invention to be understood is that the MIDlet contains a marker to the certificate or key which must have been used to sign the content, and the content signature must be located as described herein above for the platform to verify.

Likewise, in the case of a privileged operator or a signed third party MIDlet, the Certificate A or a public key and the signature of the content must be located as described herein above The crucial important aspect of the invention to be understood is that all the MIDlet needs to contain is a reference to the certificate or public key (e.g. fingerprint).

Although the present invention has been described above in connection with a music player example, the invention is applicable to other specific content such as for example but not limited to, video, movies, speech and animation.

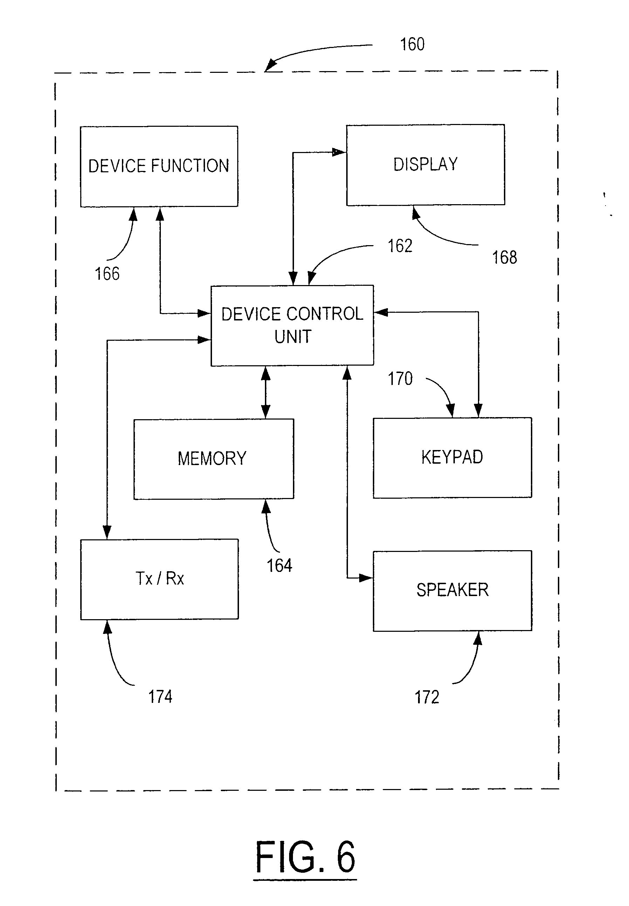

Turning now to Fig. 6, a functional block diagram of a mobile device embodying the invention for locking of applications for specially marked content is illustrated therein and generally designated 160. The mobile device 160 includes a device control unit generally designated 162 and may be a microprocessor, digital signal processor, display driver or other means including both hardware and software for carrying out the control function as well as other intended and desirable functions and may contain a suitable memory for storing respective related computer programs to perform the control intended functions of the mobile device as is well known by those skilled in the art and therefore not described in detail herein. As illustrated in Fig. 6, the mobile device 160 includes a memory 164 which is external to the device control unit 162 and may be in addition to any memory provided in the device control unit. The device control unit 162 may be manually operated by the user through a key other operative stimulus to provide a device function 166 input. The device function signal is coupled to the device control unit 162. The device control unit 162 provides an output signal to a display generally designated 168 to control the text, graphics, or other indicia corresponding to the particular function being carried out. The device function 166 may optionally include a volume control function operable by means of one or more keys of the respected key arrays such as carried on a keypad 170 for volume adjustment of music for example firm the speaker 172. The mobile device 160 also includes a transmit/receiver unit 174 coupled to the device control unit 162 for sending and receiving the wireless signals as is well known and understood to those skilled in the art and therefore not explained in further detail herein.

The invention also includes a computer program carried on a storage medium and executable by a processor in a mobile device for locking an application running on a mobile device to play specific content and includes suitable program code for marking the application in a special way to condition the device software that the application is restricted to specific content and for marking a specific content in a special way so that the device can match the specific piece content marking to the application marking. Appropriate program code is provided for deploying the application and the specific piece of content onto the mobile device in a well known and understood manner. In response to the application respecting the specific piece of content, the device software recognizes the application is restricted to play specific content therefore causing the comparison of the requested specific piece of content marking to the application marking. Also included is program code for granting application access to the specific piece of content in response to the application and specific piece of content markings matching and for denying application access to the specific piece of content in response to the application and specific piece of content markings not matching. It will be recognized by those skilled in the art that the computer program is generic and may be implemented in accordance with the method of the invention as described herein above in any number of ways well known to those skilled in the art.

The present invention has been described above byway of example in which a signature is added to the rights object in a novel way to lock specially marked applications running on a mobile device for specially marked content. Various changes and modifications may be made by those skilled in the art without departing from the broad aspects of the method of the invention, and therefore the invention is described byway of example rather than limitation.

One or more aspects, embodiments, and/or features in isolation and in all various combinations (whether or not specifically claimed in that combination or isolation) are within the present disclosure.

## Claims

1. Method, comprising the steps of:
creating an application to run on a mobile device, and
locking the application to play specific content.

2. The method as defined in claim 1 further comprising the steps of:
marking the application in a special way to condition the device software that the application is restricted to specific content, and
securing the application marking so it cannot be removed.

3. The method as defined in claim 2 further comprising the steps of:
creating a specific piece of content;
marking the specific piece of content in a special way so that the device software can match the specific piece of content marking to the application marking; and
securing the piece of content marking so it cannot be removed.

4. The method as defined in claim 2 further comprising the step of deploying the application onto the mobile device.

5. The method as defined in claim 3 further comprising the step of deploying the specific piece of content onto the mobile device.

6. The method as defined in claim 5 further comprising the step of the application requesting the specific piece of content.

7. The method as defined in claim 6 further comprising the step of the device software recognizing the application is restricted to play specific content.

8. The method as defined in claim 7 further comprising the step of:
comparing the requested specific piece of content marking to the application marking.

9. The method as defined in claim 8 further comprising the step of granting application access to the specific piece of content in response to the application and specific piece of content markings matching.

10. The method as defined in claim 8 further comprising the step of denying application access to the specific piece of content in response to the application and specific piece of content markings not matching.

11. The method as defined in claim 2 further comprising the steps of:
creating a key pair comprising a public key and a private key;
marking the application to be locked with the private key;
signing the application with the private key; and
appending the application signature and a certificate containing the public key to the application.

12. The method as defined in claim 3 further comprising the steps of:
preparing a piece of content according to OMA DRM rules;
signing a rights object associated with the DRM protected piece of content using the same private key marking the application.

13. The method as defined in claim 6 wherein the step of requesting by the application running on the mobile device a desired piece of content further comprises requesting DRM protected content.

14. The method as defined in claim 8 wherein the step of comparing further comprises:
checking by the DRM agent running on the mobile device that the application is marked properly and signed with the private key and in response thereto requiring that all content rights object have a content signature or a rights object signature that was created with the same private key used to mark the application running on the mobile device.

15. The method as defined in claim 9 further comprising the step of the application accessing a desired piece of DRM protected content in response to the DRM agent determining the application and the requested desired piece of DRM protected content have corresponding matching application signature and content signature markings.

16. Method for locking an application running on a mobile device comprising the steps of:
creating a MIDlet;
adding a flag in the manifest of the MIDlet to indicate the MIDlet must only read specific content;
creating a Certificate A;
adding the Certificate A to the manifest of the MIDlet;
signing the MIDlet with a device manufacturer's certificate;
creating the content according to OMA DRM rules;
signing the content with the Certificate A;
adding the signature to the Rights Object;
deploying the MIDlet to the mobile device wherein the MIDlet must verify that the content signature matches the MIDlet signature to read the content.

17. A mobile device suitably configured and arranged to carry out the intended operational functions of the mobile device in accordance with one or more instruction sets contained in a memory executing an application created to run on the mobile device wherein the application is locked to play specific content.

18. The mobile device as defined in claim 17 further comprising the mobile device detecting that the application is marked in a special way and in response thereto restricting the application to specific content.

19. The mobile device as defined in claim 18 further comprising:
the mobile device detecting that the specific content is marked in a special way;
means for comparing the application marking to the specific content marking;
means for accessing the specific content by the application in response to the specific content marking matching the application marking; and
means for denying access to the specific content by the application in response to the specific content marking not matching the application marking.

20. Computer program carried on a storage medium and executable by a processor in a mobile device for locking an application running on the mobile device to play specific content comprising:
program code for marking the application in a special way to condition the device software that the application is restricted to specific content;
program code for marking specific piece of content in a special way so that the device software can match the specific piece of content marking to the application marking;
program code for deploying the application and the specific piece of content onto the mobile device and in response to the application requesting the specific piece of content, the device software recognizes the application is restricted to play specific content, and wherein the requested specific piece of content marking is compared to the application marking; and
program code for granting application access to the specific piece of content in response to the application and specific piece of content markings matching and for denying the application access to the specific piece of content in response to the application and specific piece of content markings not matching.
